Europäisches Patentamt

European Patent Office

Office européen des brevets

(19)

(11) Publication number: **0 155 327**
**B1**

(12) **EUROPEAN PATENT SPECIFICATION**

(45) Date of publication of patent specification: **07.01.88**    (51) Int. Cl.⁴: **F 16 F 15/30**

(21) Application number: **84102245.2**

(22) Date of filing: **02.03.84**

(54) **Fly-wheel device.**

(43) Date of publication of application:
**25.09.85 Bulletin 85/39**

(45) Publication of the grant of the patent:
**07.01.88 Bulletin 88/01**

(84) Designated Contracting States:
**CH DE LI SE**

(56) References cited:
**FR-A- 708 102**

(73) Proprietor: **MITSUBISHI DENKI KABUSHIKI KAISHA**
**2-3, Marunouchi 2-chome Chiyoda-ku Tokyo 100 (JP)**

(72) Inventor: **Yoshida, Yasuo**
**3-16-302, Seiryo-dai 1-chome Tarumi-ku City of Kobe Hyogo Prefecture (JP)**
Inventor: **Teraoka, Masato**
**1475-323, ;ashiyama-cho City of Ono Hyogo Prefecture (JP)**

(74) Representative: **Fleuchaus, Leo, Dipl.-Ing. et al Fleuchaus & Wehser Melchiorstrasse 42 D-8000 München 71 (DE)**

## Description

### Background of the Invention

This invention relates to a fly-wheel device, and more particularly to improvements in a fly-wheel device constructed so that electrical energy is converted to inertia energy of a rotary member and when required, the inertia energy is again converted to electrical energy which is, in turn, supplied to a utility line of the power system.

A conventional fly-wheel device of the type referred to has comprised a stack of a plurality of discs having equal thicknesses and axially superposed on one another, and a plurality of fastening bolts axially extending at predetermined equal angular intervals through a peripheral portion of the stack to connect the superposed discs together into a unitary structure, each of the fastening bolts having a cross section uniform axially thereof. The fly-wheel device has been coaxially connected to a rotary shaft of an associated electric generator at one end.

In operation the individual discs of the fly-wheel device are differently raised in temperature tending to have different thermal elongations. The resulting relative movements among the individual discs, however, are restrained by the fastening bolts because each of the fastening bolts has the cross section uniform axially thereof as described above. This has resulted in the disadvantage that a bending stress developed on each of the fastening bolts becomes large as the case may be.

Accordingly, it is an object of the present invention to provide in the fly-wheel device as described above, an improved fastening bolt having a longitudinal section on at least one predetermined axial portion thereof changed so as to render a restraining force thereof in a radial direction of the stack of the superposed discs weaker than that in a direction perpendicular to the radial direction or a circumferential direction thereof.

### Summary of the Invention

The present invention provides a fly-wheel device comprising a stack of a plurality of similar discs axially superposed on one another, and a plurality of fastening bolts axially extending at predetermined equal angular intervals through a peripheral portion of the stack to connect the superposed discs together into a unitary structure with associated nuts, each of the bolts receiving holes in the discs being of larger diameter than the bolts, and each of the bolts engaging respective radial shoulder means provided in the holes of the discs, characterized in that each of the fastening bolts comprises a sectional profile on at least one predetermined axial portion thereof changed as to render its modulus of section in a radial direction of the stack smaller than that in a circumferential direction thereof thereby to weaken a restraining force of each of the fastening bolts in the radial direction of the stack, said reduced section parts of the bolts are provided between the areas of engagement of the bolts with the shoulder means.

In a preferred embodiment of the present invention each of the fastening bolts axially extends through an associated axially aligned holes on the peripheral portion of the stack having an inside diameter somewhat greater than a diameter thereof. The bolts are fixed within the axially aligned holes through a plurality of annular bushes engaging the surfaces of the respective discs near to a head of the fastening bolt except for the disc contacted by the head of the bolts and at edges exposed to the axially aligned holes. An axial portion of the fastening bolt directly facing at least one predetermined disc except for the associated bush has such a longitudinal sectional profile that a pair of opposite sides of the axial portion perpendicular to the radial direction of the stack are curved concavely toward the central longitudinal plane thereof orthogonal to the radial direction of the stack to be symmetrical with respect to the central longitudinal plane and have a thickness therebetween gradually increased from a minimum in the middle thereof to a maximum at each of axial ends thereof equal to the diameter of the fastening bolt. The other pair of opposite sides of the axial portion in a circumferential direction of the stack is defined by corresponding portion of the peripheral surface of the fastening bolt.

### Brief Description of the Drawing

The present invention will become more readily apparent from the following detailed description taken in conjunction with the accompanying drawing in which:

Figure 1 is a longitudinal sectional view of an electric generator comprising a conventional fly-wheel device;

Figure 2 is a fragmental elevational view in an enlarged scale of one of the fastening bolts extending through the fly-wheel device shown in Figure 1 with an adjacent portion of the fly-wheel device illustrated in longitudinal section;

Figure 3 is a fragmental elevational view in an enlarged scale of one embodiment according to the fastening bolt of the present invention for the fly-wheel device an adjacent portion of which is illustrated in longitudinal section; and

Figure 4 is a cross sectional view taken along the line IV—IV of Figure 3.

### Description of the Preferred Embodiment

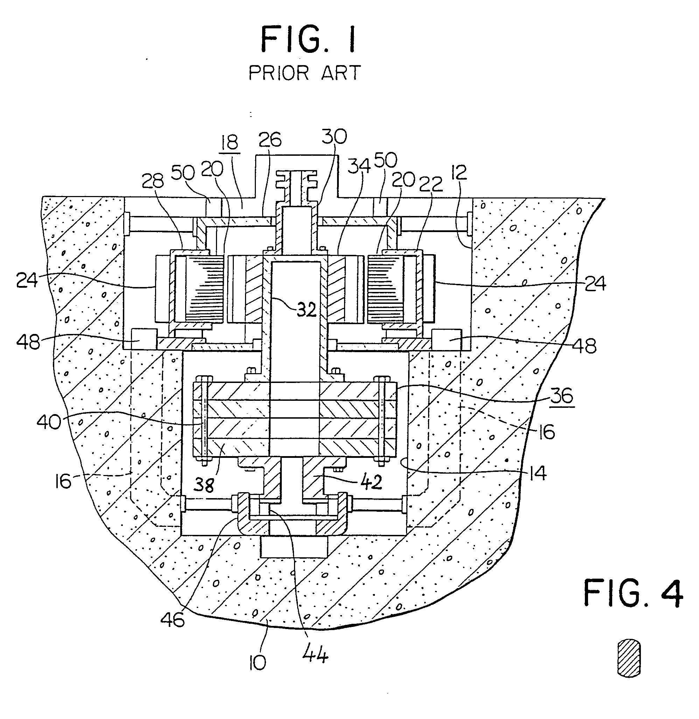

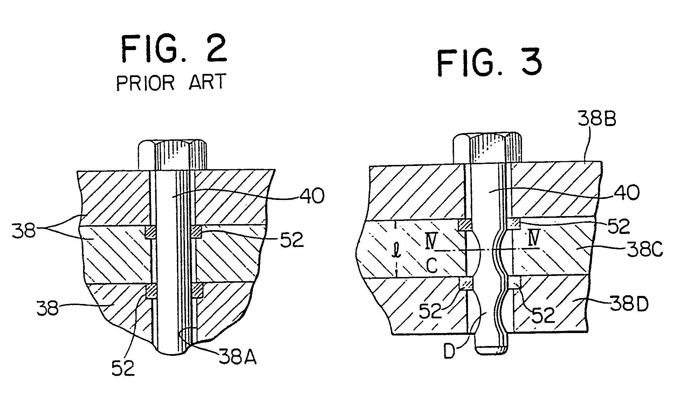

For a better understanding of the nature of the present invention, a conventional fly-wheel device will now be described in conjunction with Figures 1 and 2. The arrangement illustrated in Figure 1 comprises a reinforced concrete foundation 10, a circular generator pit 12 disposed in the foundation 10 to open on the surface of the latter, a circular fly-wheel pit 14 smaller in diameter than and disposed under the generator pit 12 within the foundation 10 to be coaxial with the generator bit 12 and open at the bottom of the upper pit 12, and a plurality of ventilating ducts in the form of U's disposed at predetermined equal angular intervals around the lower pit 14 within the foundation 10 and including one end open on the bottom portion of the pit 14 to form an outlet port and other ends opening at the bottom of the upper pit 12 on the peripheral portion to form inlet ports.

The arrangement comprises further an electric generator generally designated by the reference numeral 18 and disposed coaxially within the generator pit 12. More specifically, the electric generator 18 includes a stator 20 rigidly held by an annular frame 22 with a U-shaped section disposed on the bottom of the generator pit 12 through an annular holding plate. The stator frame 22 is provided on the peripheral wall with a plurality of air coolers 24 located at predetermined equal angular intervals thereon and has an upper leg connected to an upper bracket 26 supported by a plurality of radial arms 28 extending at predetermined equal angular intervals between the bracket 26 and the peripheral wall of the generator pit 12. An upper hollow rotary shaft 30 is journalled by the bracket 26 to extend downward as viewed in Figure 1 and connected to a main hollow rotary shaft 32 which, in turn, extends in the fly-wheel pit 14. A rotor 34 is fixedly secured to the main rotary shaft 32 so as to face the stator 20 through a predetermined annular spacing.

As shown in Figure 1, a fly-wheel device generally designated by the reference numeral 36 is fixedly secured to the lower portion of the main rotary shaft 32 located within the fly-wheel pit 14. The fly-wheel device 36 includes a stack of a plurality of discs 38, in this case, four discs, with a common diameter having suitable equal thicknesses and axially superposed on one another and a plurality of fastening bolts 40 axially extending at predetermined equal angular intervals through a peripheral portion of the stack to connect the superposed discs 38 together into a unitary structure with associated nuts.

The lower surface as viewed in Figure 1 of the fly-wheel device 36 is bolted to a thrust collar 42 subsequently journalled by a thrust bearing 44 which is, in turn, supported by a lower bracket 46 fixed to the bottom of the fly-wheel pit 14.

As shown in Figure 1, a plurality of blowers 48 are disposed at the inlet ports of the ventilating ducts 16 one for each duct 16 and a plurality of separate blowers 50 are disposed at predetermined equal angular intervals on the outer surface of the upper bracket 26.

In order to connect the superposed discs 38 together into the unitary structure, usual bolts have been used. As shown best in Figure 2, the fastening bolt 40 has had a diameter or a cross section uniform axially thereof and extended through an associated axially aligned holes 38A in the superposed discs 38 having an inside diameter somewhat larger than the diameter thereof. The fastening bolt 40 is fixed within the axially aligned holes 38A by a plurality of annular bushes 52 engaging those surfaces of the respective discs 38 near to a head of the bolt 40 or the upper surfaces as viewed in Figure 1 except for the disc contacted by the head of the bolt 40 and at their edges exposed to the axially aligned holes 38A. More specifically, the annular bushes 52 are put in annular steps disposed on inner peripheral portions of the upper surfaces as viewed in Figure 2 of the superposed discs 38 to communicate with the axially aligned holes 38A except for the uppermost disc 38 as viewed in Figure 2.

As described above, the occurrence of different temperature rises on the superposed discs 38 tends to cause relative movements among the discs 38. However, those relative movements are restrained by the fastening bolts 40 because of the uniform diameter thereof. This has resulted in the disadvantage as described above.

The present invention contemplates to eliminate that disadvantage by provision of a fastening bolts having a specified sectional profile at least one predetermined portion thereof shaped so as to weaken a restraining force thereof exerted on the discs radially thereof.

In Figure 3 wherein like reference numerals designate the components identical to those shown in Figure 2, there is illustrated one embodiment according to the essential part of the fly-wheel device of the present invention. The arrangement illustrated is different from that shown in Figures 1 and 2 only in that in Figure 3, three discs 38B, 38C and 38D having equal thicknesses and equal diameters are axially superposed on one another and the fastening bolt 40 has a specified longitudinal sectional profile on each of two predetermined axial portions thereof, in this case, that portion C extending between the lower end of the annular bush 52 engaged by the second disc 38C and the upper end of the annular bush 52 engaged by the third disc 38D and that portion D extending between the lower end of the latter bush 52 and the lower end of third disc 38D. The specified longitudinal sectional profile is formed so that a pair of opposite sides of the predetermined bolt portion C perpendicular to a radial direction of the stack are similarly curved concavely toward of the central longitudinal plane of the bolt 40 orthogonal to a radial direction of the stack to be symmetrical with respect to the central longitudinal plane and have a thickness therebetween gradually increased from a minimum in the middle thereof to a maximum at each of axial ends of the axial bolt portion C equal to the diameter of the bolt 40. Another pair of opposite sides of the axial bolt portion C are defined by corresponding portion of the peripheral surface of the bolt 40. The axial bolt portion D is identical in longitudinal sectional profile to the axial bolt portion C.

Figure 4 shows the resulting cross sectional profile in the middle of the predetermined axial portion C of the bolt 40. As shown in Figure 4, the cross sectional profile includes a pair of opposite parallel sides orthogonal to the abovementioned radial direction and a pair of opposite segments of circular defined by corresponding portions of the peripheral surface of the bolt 40.

This is true in the case of the predetermined axial bolt portion D.

Each of the predetermined bolt portions C and D has such a sectional profile that a modulus of section in the radial direction of the stack is smaller than that in a circumferential direction thereof.

It is assumed that the uppermost disc 14B is different in temperature rise from the next succeeding disc 14C to cause a relative shear δ therebetween. Under the assumed conditions a bending moment M applied to the fastening bolt 40 may be expressed by

$$M = 6EI\delta/l^2$$

where E designates a Young's modulus of a material forming the fastening bolt 40, I a second moment of area of the bolt and l designates a span shown in Figure 3.

For a large relative shear δ, the bending moment M becomes large resulting in a high bending stress developed on the fastening bolt. However, by forming the portion C of the bolt applied with the high bending moment into the cross section shown in Figure 4, the second moment of area I becomes low in the radial direction of the stack. This results in the alleviation of the bending stress exerted on the fastening bolt.

It has been found that only a single predetermined bolt portion C may have the sectional profile as described above with the satisfactory result.

From the foregoing it is seen that the present invention provides a fly-wheel device comprising a stack of a plurality of similar discs superposed on one another and a plurality of fastening bolts axially extending at predetermined equal angular intervals through a peripheral portion of the stack to connect the superposed disc together into a unitary structure with associated nuts, each of the fastening bolts having such a sectional profile on at least one predetermined axial portion thereof so that a modulus of section in a radial direction of the stack is smaller than that in a circumferential direction thereof. Thus the fastening bolt can be easy to be pliantly bent on the predetermined bolt portion. As a result, each of the fastening bolts is applied with a bending stress capable of being effectively alleviated.

While the present invention has been illustrated and described in conjunction with a single preferred embodiment thereof, it is to be understood that numerous changes and modulations may be resorted to without departing from the scope of the present invention as defined in the claims. For example, any number of fly-wheel discs other than three discs may be superposed on one another and each of the fastening bolts may have the sectional profiles as described above on more than two predetermined portions thereof.

**Claims**

1. A fly-wheel device (36) comprising a stack of a plurality of similar discs (38B, 38C, 38D) axially superposed on one another, and a plurality of fastening bolts (40) axially extending at predetermined equal angular intervals through a peripheral portion of the stack to connect the superposed discs (38B, 38C, 38D) together into a unitary structure with associated nuts, each of the bolt receiving holes (38A) in the discs being of larger diameter than the bolts (40), and each of the bolts engaging respective radial shoulder means (52) provided in the holes (38A) of the discs, characterized in that each of the fastening bolts (40) comprises a sectional profile on at least one predetermined axial portion thereof changed so as to render its modulus of section in a radial direction of the stack smaller than that in a circumferential direction thereof thereby to weaken a restraining force of each of the fastening bolts in the radial direction of the stack, said reduced section parts of the bolts (40) being provided between the areas of engagement of the bolts with the shoulder means (52).

2. A fly-wheel device as claimed in claim 1, wherein each of the fastening bolts (40) has said sectional profile on each of a pair of predetermined axial portions thereof consecutive to each other.

3. A fly-wheel device as claimed in claim 1, wherein said sectional profile includes a pair of opposite sides in the radial direction of the stack curved concavely toward a central longitudinal plane thereof orthogonal to the radial section of the stack to be similar and opposite to each other to be symmetrical with respect to the central longitudinal plane and another pair of opposite sides in a circumferential direction of the stack defined by corresponding portion of a peripheral surface of the fastening bolt.

**Patentansprüche**

1. Ein Schwungrad-Einrichtung (36) mit einem Stapel aus einer Vielzahl von ähnlichen Scheiben (38B, 38C, 38D), die in axialier Richtung übereinander angeordnet sind, und einer Vielzahl von Befestigungsschrauben (40), die in axialer Richtung unter vorbestimmten gleichen Winkelabständen durch einen Umfangsteil des Stapels verlaufen, um die übereinanderliegenden Scheiben zusammen in eine einheitliche Struktur mit zugeordneten Muttern zu verbinden, wobei jedes die Schrauben aufnehmende Loch (38A) in den Scheiben einen größeren Durchmesser aufweist als die Schrauben (40) und jede der Schrauben entsprechende radiale Schulterelemente (52) berührt, die in den Löchern (38A) der Scheiben vorgesehen sind, dadurch gekennzeichnet, daß jede der Befestigungsschrauben (40) ein Querschnittsprofil auf mindestens einem vorbestimmten axialen Abschnitt aufweist, das so geändert ist, daß ihr Querschnittsmodul in der radialen Richtung des Stapels kleiner ist als der in einer Umfangsrichtung des Stapels, um dadurch eine Rückhaltekraft jeder der Befestigungsschrauben in einer radialen Richtung des Stapels herabzusetzen, wobei die Teile der Schrauben (40) mit herabgesetztem Querschnitt zwischen den Berührungsgebieten der Schrauben mit den Schulterelemente (52) liegen.

2. Eine Schwungrad-Einrichtung nach Anspruch 1, bei der jede der Befestigungsschrauben (40) das Querschnittsprofil auf jedem Abschnitt eines Paar von vorbestimmten axialen Abschnitten der Schraube aufweist, die aufeinander folgen.

3. Eine Schwungrad-Einrichtung nach Anspruch 1, bei der das Querschnittsprofil ein Paar von in radialer Richtung des Stapels einander gegenüberliegenden Seiten aufweist, die in konkaver Weise auf eine zentrale Längsebene der Befestigungsschraube zu gebogen sind, die senkrecht zum radialen Querschnitt des Stapels liegt, um gleich und entgegengesetzt zueinander zu sein und bezüglich der zentralen Längsebene symmetrisch zu liegen und ferner ein weiteres Paar von einander gegenüberliegenden Seiten in einer Umfangsrichtung des Stapels aufweist, die durch einen entsprechenden Teil einer Umfangsoberfläche der Befestigungsschraube definiert sind.

**Revendications**

1. Volant d'inertie (36) comprenant une pile de plusieurs disques semblables (38B, 38C, 38D) superposés l'un sur l'autre dans le sens axial, et une pluralité de boulons de fixation (40) s'étendant axialement à des intervalles angulaires identiques prédéterminés à travers une partie périphérique de la pile pour raccorder ensemble les disques superposés (38B, 38C, 38D) en une structure unitaire comportant des écrous associés, chacun des trous (38A) recevant des boulons dans le disque étant d'un diamètre supérieur aux boulons (40), chacun des boulons s'engageant dans des épaulements radiaux (52) prévus dans les trous (38A) des disques, caractérisé en ce que chaque boulon de fixation (40) comprend sur au moins une de ses parties axiales prédéterminées un profil en section modifié de manière à rendre son module de section dans la direction radiale de la pile inférieur à celui de la direction périphérique de la pile, affaiblissant ainsi la force de contrainte de chacun des boulons de fixation en direction radiale par rapport à la pile, lesdites parties à section réduite des boulons (40) étant prévues entre les zones d'engagement des boulons avec les moyens d'époulement (52).

2. Volant d'inertie selon la revendication 1, caractérisé en ce que chaque boulon de fixation (40) présente ledit profil de section sur chacune d'une paire de parties axiales prédéterminées du boulon, qui se suivent en succession.

3. Volant d'inertie selon la revendication 1, caractérisé en ce que le profil de section comporte une paire de côtés opposés dans la direction radiale de la pile, qui est courbée de manière concave vers un plan longitudinal central de la pile, plan qui est orthogonal par rapport à la section radiale de la pile, pour être en position semblable mais opposée, tout en étant symétriques par rapport au plan central longitudinal et en ce qu'une autre paire de côtés opposés dans la direction périphérique de la pile est définie par une portion correspondante à la surface périphérique du boulon de fixation.

# FIG. I

PRIOR ART

# FIG. 4

# FIG. 2
PRIOR ART

# FIG. 3